(19) Europäisches Patentamt
European Patent Office
Office européen des brevets

(11) **EP 4 727 141 A1**

(12) **EUROPEAN PATENT APPLICATION**

(43) Date of publication:
**15.04.2026 Bulletin 2026/16**

(21) Application number: **24306658.6**

(22) Date of filing: **10.10.2024**

(51) International Patent Classification (IPC):
*H04N 21/442* (2011.01)   *G06Q 10/06* (2023.01)
*H04N 21/466* (2011.01)   *H04N 21/658* (2011.01)

(52) Cooperative Patent Classification (CPC):
**H04N 21/442; H04N 21/4436; H04N 21/4667;
H04N 21/6582**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **REINHARD, Erik
35630 HEDE-BAZOUGES (FR)**
• **DEMARTY, Claire-Helene
35520 MONTREUIL LE GAST (FR)**
• **BLONDE, Laurent
35235 THORIGNE-FOUILLARD (FR)**
• **AUMONT, Franck
35770 VERN SUR SEICHE (FR)**
• **LE MEUR, Olivier
35160 TALENSAC (FR)**

(74) Representative: **Vossius & Partner
Patentanwälte Rechtsanwälte mbB
Siebertstraße 3
81675 München (DE)**

(54) **DEVICE-REPORTED CARBON EMISSIONS**

(57)    Apparatuses and methods are described including techniques for assessing carbon emissions caused by the distribution and the consumption of media content. Techniques include determining information indicative of a carbon intensity associated with a device displaying a video segment of a content received from a content provider, recording information indicative of energy spent by the device to display the video segment, and then, transmitting an emission report generated based on the determined information and the recorded information. Techniques further include transmitting content to devices; receiving emission reports, from those devices, corresponding to respective video segments of the content displayed by respective devices; and then, aggregating information provided by the emission reports to obtain the emission amount caused by displaying, by the devices, at least a portion of the transmitted content.

910

DETERMINE INFORMATION INDICATIVE OF A CARBON INTENSITY ASSOCIATED WITH A DEVICE DISPLAYING A VIDEO SEGMENT OF A CONTENT RECEIVED FROM A CONTENT PROVIDER

920

RECORD INFORMATION INDICATIVE OF ENERGY SPENT BY THE DEVICE TO DISPLAY THE VIDEO SEGMENT

930

TRANSMIT AN EMISSION REPORT GENERATED BASED ON THE DETERMINED INFORMATION AND THE RECORDED INFORMATION

**FIG. 9**
**900**

EP 4 727 141 A1

# EP 4 727 141 A1

## Description

BACKGROUND

Recent increase in media contents distributed to viewers leads to an increase in the energy spent to display these contents by the viewers' display devices. In turn, the increase in such energy consumption leads to an increase in greenhouse gas emissions. To mitigate climate change, industry players, the operations of whom cause that increase in greenhouse gas emissions, may be required to assess and report the amount of such emissions. This includes content providers such as broadcasters, streaming platform operators, or any other content distributers. Greenhouse gas emission associated with a certain activity can be measured based on the energy spent to perform that activity and based on carbon intensity. However, because the energy spent on displaying content depends on the display technology and because carbon intensity depends on the source(s) of power used to supply electricity to the device displaying the content, an accurate assessment of the caused gas emission may be difficult.

SUMMARY

Aspects disclosed in the present disclosure describe methods for generating information regarding carbon emission caused by consumption of content. The methods comprise determining information indicative of a carbon intensity associated with a device displaying a video segment of a content received from a content provider, and recording information indicative of energy spent by the device to display the video segment. Then, transmitting an emission report generated based on the information indicative of the carbon intensity and the recorded information. Aspects disclosed in the present disclosure also describe methods for aggregating information regarding carbon emissions caused by distribution of content. The methods comprise transmitting content to devices, and receiving emission reports from the devices. Each of the received emission reports is with respect to a video segment of the content displayed by a respective device. Then, aggregating information provided by the emission reports to obtain an emission amount caused by displaying, by the devices, at least a portion of the transmitted content.

Aspects disclosed in the present disclosure describe apparatuses for generating information regarding carbon emission caused by consumption of content. The apparatuses comprise at least one processor and memory storing instructions. The instructions, when executed by the at least one processor, cause the apparatuses to determine information indicative of a carbon intensity associated with a device displaying a video segment of a content received from a content provider and to record information indicative of energy spent by the device to display the video segment. Then, to transmit an emission report generated based on the information indicative of the carbon intensity and the recorded information. Aspects disclosed in the present disclosure also describe apparatuses for aggregating information regarding carbon emissions caused by distribution of content. The apparatuses comprise at least one processor and memory storing instructions. The instructions, when executed by the at least one processor, cause the apparatuses to transmit content to devices, to receive emission reports from the devices. Each of the received emission reports is with respect to a video segment of the content displayed by a respective device. Then, to aggregate information provided by the emission reports to obtain an emission amount caused by displaying, by the devices, at least a portion of the transmitted content.

Aspects disclosed in the present disclosure describe a non-transitory computer-readable medium comprising instructions executable by at least one processor to perform methods for generating information regarding carbon emission caused by consumption of content. The methods comprise determining information indicative of a carbon intensity associated with a device displaying a video segment of a content received from a content provider, and recording information indicative of energy spent by the device to display the video segment. Then, transmitting an emission report generated based on the information indicative of the carbon intensity and the recorded information. Aspects disclosed in the present disclosure also describe a non-transitory computer-readable medium comprising instructions executable by at least one processor to perform methods for aggregating information regarding carbon emissions caused by distribution of content. The methods comprise transmitting content to devices, and receiving emission reports from the devices. Each of the received emission reports is with respect to a video segment of the content displayed by a respective device. Then, aggregating information provided by the emission reports to obtain an emission amount caused by displaying, by the devices, at least a portion of the transmitted content.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

BRIEF DESCRIPTION OF THE DRAWINGS

FIG. 1 is a block diagram of an example system, according to aspects of the present disclosure.

FIG. 2 is a flowchart illustrating a method for determining the carbon intensity associated with an electrical device, according to aspects of the present disclosure.

FIG. 3 is a flowchart illustrating a first method for tracking carbon emission caused by content consumption, according to aspects of the present disclosure.

FIG. 4 is a flowchart illustrating a second method for tracking carbon emission caused by content consumption, according to aspects of the present disclosure.

FIG. 5 is a flowchart illustrating a third method for tracking carbon emission caused by content consumption, according to aspects of the present disclosure.

FIG. 6 is a flowchart illustrating a first method for integrating emission reports received from consumers of content, according to aspects of the present disclosure.

FIG. 7 is a diagram illustrating a second method for integrating emission reports received from consumers of content, according to aspects of the present disclosure.

FIG. 8 is a flowchart illustrating a method for determining a renewable source proportion associated with an electrical device, according to aspects of the present disclosure.

FIG. 9 is a flowchart illustrating a method for generating information regarding carbon emission caused by consumption of content, according to which aspects of the present embodiments can be implemented.

FIG. 10 is a flowchart illustrating a method for aggregating information regarding carbon emissions caused by distribution of content, according to which aspects of the present embodiments can be implemented.

DETAILED DESCRIPTION

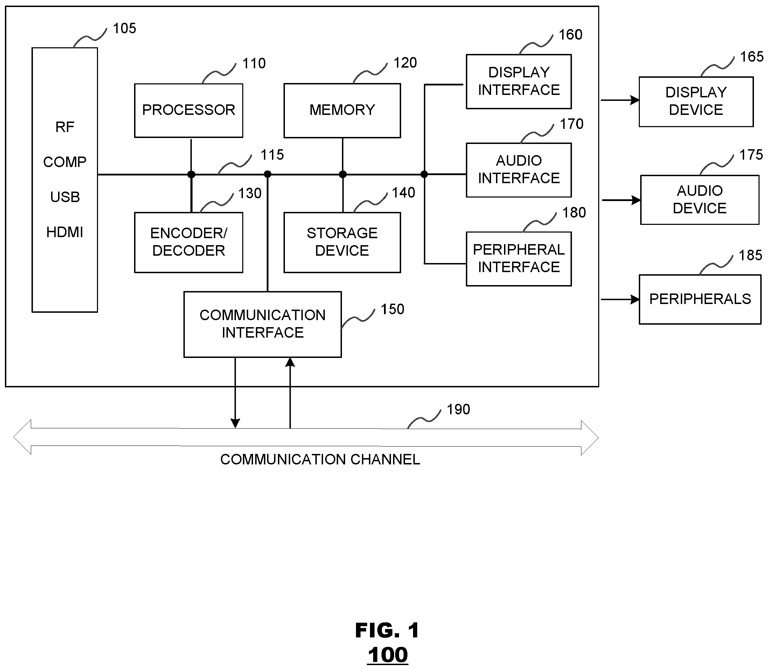

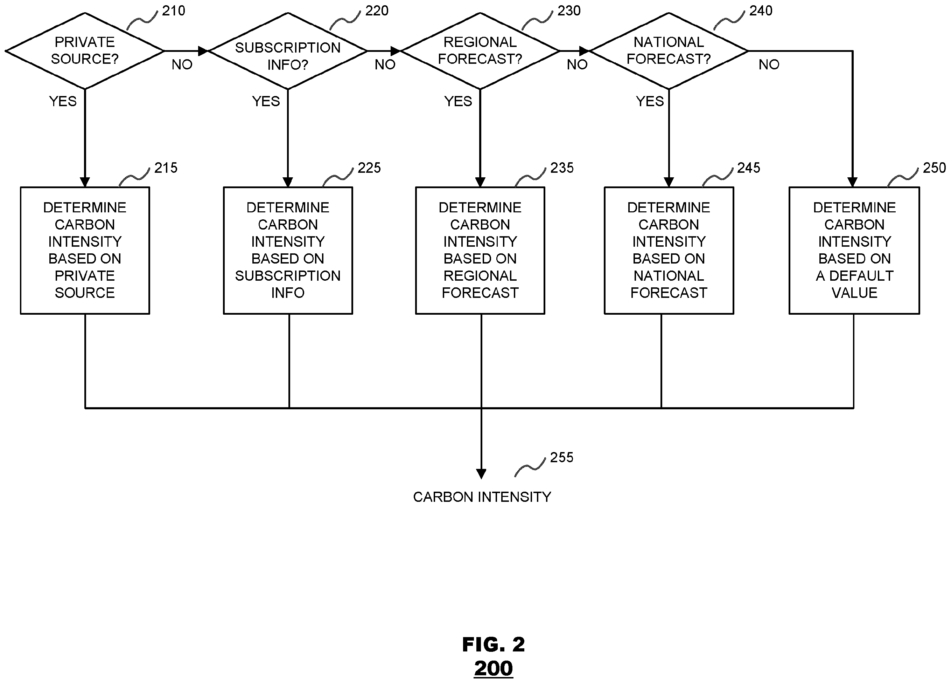

Apparatuses and methods are presented herein for assessing carbon emissions caused by the distribution and the consumption of media content (i.e., content). A system for processing and displaying content, with which various aspects and examples described herein may be implemented, is generally described in reference to FIG. 1, followed by a description of the aspects of the present disclosure in reference to FIGS. 2-10.

FIG. 1 illustrates a block diagram of an example system 100. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments (or aspects) described herein, including signal (or data) coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU) and/or graphics processing unit (GPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or by the encoder/decoder module 130 may be stored in the storage device 140 and subsequently loaded into memory 120 for execution by the processor 110 and/or by the encoder/decoder module 130. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or of the encoder/decoder module 130 is used to store instructions and/or provide working memory for video encoding and decoding functions. In some embodiments, memory external to the processor 110 and/or to the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

As part of the mitigation of climate change, the European Commission is increasingly requiring companies to report their greenhouse gas emissions. To this end, three scopes have been defined. The first scope (so-called Scope 1) includes direct emissions caused by one's facilities and vehicles. The second scope (so-called Scope 2) includes indirect emissions due to purchase of electricity, steam, heating, and cooling for own use. The third scope (so-called Scope 3) includes indirect emissions caused by one in the value chain, both upstream and downstream.

Scope 3 reporting is further broken down into a number of different classes - as described in the Greenhouse Gas (GHG) Protocol "Corporate Value Chain (Scope 3) Accounting and Reporting Standard," that is a supplement to the GHG Protocol Corporate Accounting and Reporting Standard. Therein, upstream activity categories in Scope 3 include: 1) purchased goods and services; 2) capital goods; 3) fuel-related and energy-related activities, not included in Scope 1 or in Scope 2; 4) upstream transportation and distribution; 5) waste generated in operations; 6) business travel; 7) employee commuting; and 8) upstream leased assets. These activity categories are followed by downstream activity categories in Scope 3, including: 9) downstream transportation and distribution; 10) processing of sold products; 11) use of sold products; 12) end-of-life treatment of sold products; 13) downstream leased assets; 14) franchises; and 15) investments.

According to dIMPACT, the categories included in Scope 3 that are relevant to broadcasters and media streaming companies are the first category of "purchased goods and services" and the eleventh category of "use of products sold" (see, "The dIMPACT Methdology" resource at https://dimpact.org/resource?resource=2). For example, consider a broadcaster transmitting content (e.g., an event live coverage, a movie, or a TV show) through digital terrestrial television (DTV). An end-user device such as a television receiving the content will use energy to display it, and, thereby, will cause an emission. Such emission is classified under Scope 3, category 11, that is, emission caused by "use of sold products." The reporting of Scope 3, category 11 emissions by a broadcaster is currently extremely difficult.

In a related art, techniques are described that enable broadcasters to estimate their indirect use phase emissions (i.e., Scope 3, category 11 emissions). Therein, evaluations are made - with respect to audience size and types of display technologies used by such an audience - to estimate the overall energy used to display a broadcasted content. The greenhouse gas emission caused by consuming that broadcasted content is then derived based on the estimated overall energy and the national gas emission intensity. In such an approach, only a coarse estimate of the greenhouse gas emission caused by a broadcaster can be made (see, European Patent Application 24305262.8, filed February 15, 2024, the content of which is incorporated herein in its entirety). In another related art, instead of relying on a coarse estimate, techniques are described that rely on information collected from devices to obtain respective energies spent to display received content. In this approach, a display device is configured to transmit back to a broadcaster data that are indicative of its energy consumption (see, European Patent Application 24315189.1, filed April 18, 2024, the content of which is incorporated herein in its entirety).

Aspects disclosed herein extend the above mentioned related arts, enabling a content provider to perform accurate assessment of greenhouse gas emissions associated with content viewed on display devices based on emission reports communicated back by the devices to the content provider (e.g., the broadcaster, the streaming platform operator, or any other content provider). While aspects disclosed herein are described with respect to display devices playing (or consuming) content, these aspects can also be applied to other device types, including, for example, appliances that consume energy, and thereby, cause emissions, the degree of which can be communicated to the appliance maker (e.g., manufacturer or designer).

Energy consumption can be an indicator of a corresponding greenhouse gas emission. For example, the average national gas emission intensity (e.g., in $g\,CO_2\text{-}e\,/\,kWh$) can be multiplied by the energy spent (e.g., in $kWh$) to obtain the amount of greenhouse gas emission (e.g., in $g\,CO_2\text{-}e$) caused by that energy consumption. This, however, does not take into consideration that: some energy providers have a cleaner energy mix than others, even within the same country; for the same location different operators may offer higher or lower "green" subscriptions; the energy mix may depend on the time of day (e.g., due to solar energy production) or on the current load on the grid. This means that greenhouse gas emissions associated with, for example, watching television, depend not only on the amount of electricity (energy) consumed, but also on a multitude of other factors that determine how that electricity was generated and/or delivered.

According to aspects disclosed herein, techniques are described that associate an emission intensity (referred to herein also as carbon intensity) with a display device, taking into consideration the display device's operating circumstances, such as location, time of day, and energy source(s). The emission intensity can be communicated to a broadcaster and/or to a maker of the display device who may wish to understand their caused environmental impact and/or for the purpose of Scope 3 reporting. The emission intensity can also be presented to the user of the display device for user sensibilization and/or for Scope 2 reporting, should that become mandated.

The electricity that is used by any device can be generated by different power sources - for example, by a traditional coal-fired or gas-fired source of power, by a nuclear source of power, or by renewable sources of power (e.g., solar power, hydropower, or wind power). Each power source has its own carbon footprint (along with other environmental advantages and disadvantages). The availability of each of these power sources varies over time. The availability of solar power depends on sun light. The availability of wind power depends on sufficient wind. The availability of other power sources depends on the operability of the plants that generate them (e.g., stress corrosion in nuclear reactors has caused several nuclear reactors to go offline in France). Consequently, the mix of energy sources - that is, the proportion of power sources contributing to the energy being generated in a region at any given time - is not constant, but may vary. Such change in the energy source mix may be in part predictable and in part unpredictable over longer or shorter time periods.

Thus, the intensity of gas emissions - that is, the greenhouse gas emissions produced per unit of electricity - also varies over time as a consequence of the change in the energy source mix.

Furthermore, in some countries, consumers may have the option to choose electricity subscriptions from among different suppliers, or they may choose among different types of electricity subscriptions from the same supplier. Some consumers may use their own private (renewable) energy source, which may cause greenhouse gas emission that is independent of the emission that may be caused when using a local energy provider.

All of these factors contribute to significant uncertainty about the intensity of greenhouse gas emissions associated with the use of electrical devices. And so, users typically cannot tell what the intensity of greenhouse gas emission that is associated with the use of their electrical device at any moment in time. Moreover, companies, such as television makers, broadcasters, and operators of streaming platforms, face significant uncertainty with respect to their required reporting of greenhouse gas emissions.

Aspects described herein include techniques that can be used to associate a greenhouse gas emission amount with the activity of using an electrical device, considering local and temporal parameters affecting that emission. For example, a greenhouse gas emission can be associated with the activity of consuming content by an end-user. Information about the associated greenhouse gas emission can then be reported to a related entity, such as the content provider or the content producer. In another example, a greenhouse gas emission can be associated with the activity of operating an appliance by an end-user. Information about the associated greenhouse gas emission can then be reported to a related entity, such as the distributer, manufacturer, or designer of the appliance. In turn, the entities receiving the greenhouse gas emission reports can use the reports to inform their operation, or to inform their technology development, and/or for Scope 3 reporting.

Gas emissions are considered to include seven greenhouse gases identified in the Kyoto protocol: carbon dioxide ($CO_2$), methane ($CH_4$), nitrous oxide ($N_2O$), hydrofluorocarbons (HFCs), perfluorocarbons (PFCs), sulfur hexafluoride ($SF_6$), and nitrogen trifluoride ($NF_3$). With suitable conversion factors - known as global warming potentials (GWPs), as defined by the international plant protection convention (IPCC) for a given time horizon - these can be converted into $CO_2$ equivalents, referred to herein as $CO_2$-e.

Carbon intensity is the amount of greenhouse gas emission generated per unit of electricity. Carbon intensity can be measured by SI units, *g/J*, representing unit of mass per unit of energy. That is, the carbon intensity is measured by the mass of the gas emission that is associated with the production or the use of a unit of energy. However, many other units of measurement can be used, including for example: *g $CO_2$-e / kWh, kg $CO_2$-e / kWh, lbs $CO_2$-e / kWh,* or *t $CO_2$-e / MWh.*

FIG. 2 is a flowchart illustrating a method for determining the carbon intensity associated with an electrical device 200. The granularity of the information currently available for any given time and location on the planet varies considerably. Thus, the most accurate information that is available is used to determine the carbon intensity associated with a use of electricity by a device at a given time and at a given location. FIG. 2 demonstrates the selection of the information source used to obtain the carbon intensity that is, in turn, used to derive the emission associated with electricity consumed by a given end-user device.

The method 200 may be applied to query in succession the most local (specific) information first, followed by increasingly more global (coarse) information. Thus, the most local information may be available for end-users who have their own locally produced source of energy 210, based on which the carbon intensity is determined 215. Such energy may come from renewable sources, such as privately owned solar panels or wind turbines, or from diesel generators. If the electrical device is connected to a grid, then a series of queries 220-240 may be carried out to determine what level of information is available. First, it can be queried whether subscription information is available 220. In this case, the used infrastructure may allow the electrical device to query an API about the specific electricity subscription held by the client, then this subscription information can be used to determine the carbon intensity 225. If subscription information is not available, then the presence of a regional energy forecast can be queried 230, and if available, the carbon intensity can be determined based on that regional energy forecast 235. An energy forecast may vary with time since it typically takes into account many factors that affect the current energy mix, such as the weather and the load on the network. If a regional forecast is not available, then a national energy forecast may be queried 240. If available, carbon intensity can be determined based on the national forecast 245. In the absence of a national energy forecast, a predetermined value for the carbon intensity can be used 250 - for example, the national gas emissions intensity can be used as a default.

According to aspects, if the electricity used to power a display device is from an on-premises source, and if this source is renewable, such as a photovoltaic solar panel or a wind-turbine, then the carbon intensity associated with this power source can be deemed to be zero 215 (although there may be emissions caused by producing and by recycling of the electricity generation equipment itself). However, if the electricity used to power a television device is from an on-premises source, but this source is not renewable, then there are carbon emissions associated with this electricity supply. The most common form of on-premises non-renewable sources of power are diesel generators, as privately owned diesel generators are used extensively in many parts of the world where access to grid electricity is intermittent or absent. To determine the carbon intensity 215 associated with a diesel generator, data measured by the generator or provided by the generator manufacturer can be used. If such data are not available, then an average emission factor can be determined 215 (see, Jakhrani A Q, et al., "Estimation of carbon footprints from diesel generator emissions," 2012 International Conference in Green and Ubiquitous Technology, 2012, hereinafter "Jakhrani"). For example, an average power rating of 3.5 *kW* can be assumed, which produces an average 1.58 *kg CO₂* per *kWh,* according to data interpolated from Table 1 in Jakhrani.

In certain countries, such as France, end-users can connect to one of several suppliers of electricity. These suppliers may offer subscriptions with different features and pricings. For example, a single supplier can offer multiple types of electricity subscriptions; some suppliers exclusively offer electricity that comes 100% from renewable sources; other suppliers offer packages that offer electricity 100% from renewable sources, packages that offer electricity partially from renewable sources, or packages that offer electricity stemming from nuclear of fossil fuel sources. In such a market, the power source mix used to supply electricity to any given home depends therefore on the subscription taken by its occupant.

One way in which subscription information can be made available is via the electricity meter. In France, for example, most homes are equipped with a Linky electricity meter. This meter can be read remotely, and Enedis (the power grid operator in France) provides an API with which the meter's measured data can be read. Among the information that can be read are account information and usage information. That API could be extended with the necessary information to enable a client to determine the nature of the subscription. If the subscription information indicates that the electricity purchased by the account holder is 100% renewable, then the carbon intensity can be determined 225 to be zero. If the subscription information indicates a specific power source mix, the carbon intensity C can be determined 225 as:

$$C = (uC_{coal} + xC_{nuclear} + yC_{solar} + zC_{wind}) \qquad (1)$$

where $C_{coal}$, $C_{nuclear}$, $C_{solar}$, and $C_{wind}$ represent the carbon intensity attributed, respectively, to a coal power source, a nuclear power source, a solar power source, and a wind power source; and where the distribution of power sources in percentage is u for coal, *x* for nuclear, *y* for solar, and *z* for wind.

The carbon intensity for an individual consumer (or consumer device) may be derived from a regional forecast 235, for example made available through an API. An example is the API made available in the United Kingdom by the National GRID ESO, which measures and makes available the carbon intensity for 14 geographical regions in Great Britain (see, National Grid ESO, 'Carbon Intensity API', https://carbonintensity.org.uk/, retrieved 24-4-2024). In a second example, France's electricity transmission network (RTE) makes regional data available on its website (see, RTE, 'Télécharger les indicateurs', https://www.rte-france.com/eco2mix/telecharger-les-indicateurs). It also offers an API (see, RTE, 'Generation forecast', https://data,rte-france.com/catalog/-/api/generation/Generation-Forecast/v2.1). A third example is Grid Status which has an API through which regional electricity data, including carbon intensity, can be accessed in the United States (see, Grid Status, https://www.gridstatus.io/). The values retrieved through such APIs vary according to geographical location as well as time, because the power source mix changes over time and typically depends on the current load, the availability of sun light, wind, and hydropower, as well as on outages (either scheduled or unscheduled).

If regional forecasts are not available for a particular region or country, then a national forecast may be used instead to determine the carbon intensity 245. Such data are currently available through APIs, for example from Electricity Maps (see, https://www.electricitymaps.com) or WattTime (see, https ://watttime. org) which cover large parts of the world (and offer regional data in the United States). While this data is geographically less granular than the regional forecasts described above, they do take into account temporal factors such as the availability of sun light, wind, hydropower, and the occurrence of (scheduled and unscheduled) outages.

If no data are available from regional or national forecasts, then, as a last resort, carbon intensity can be determined based on a predetermined (default) value 250, such as the national gas emissions intensity. This is a value that represents the average carbon intensity of a given country. As an example, a database with country-level carbon intensity information can be purchased from the IEA (see, "Emission factors 2023," https://www.iea.org/data-and-statistics/data-product/emissions-factors-2023), or it can be derived from data presented by Our World in Data (see, "Carbon intensity of electricity generation," https://ourworldindata.org/grapher/carbon-intensity-electricity).

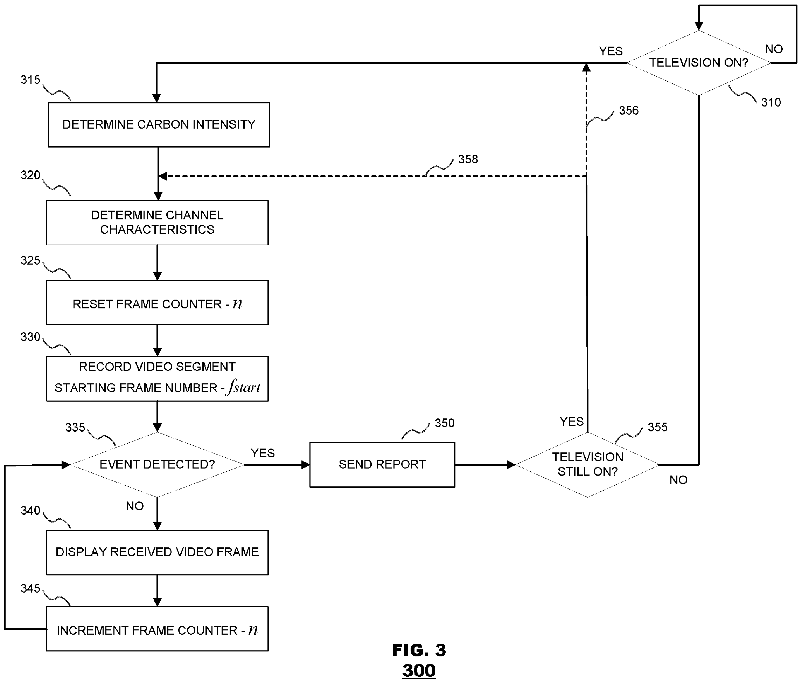

FIG. 3 is a flowchart illustrating a first method for tracking carbon emission caused by content consumption 300. A display device (e.g., a television) can be configured to generate reports having information indicative of emissions caused by the displaying of a content and to send these reports to the content provider (e.g., a broadcaster, a streaming platform operator, or any other content distributer) or to the device maker. The content provider can use the received reports to generate a Scope 3 emission report, while the device maker can use the reports to improve the energy consumption of the device, for example.

As demonstrated in FIG. 3, when a television is turned on 310, the carbon intensity is determined in step 315 (e.g., as described with respect to FIG. 2). In step 320, the viewed video channel characteristics are determined. For example, identifying the channel currently viewed may enable identifying the content played (e.g., a movie, a TV show, a news coverage, a commercial), that is, the content the emission report corresponds to. In step 325, a frame counter, denoted *n*, is reset to zero. Then, in step 330, the starting frame number of a video segment, denoted $f_{start}$, is recorded. In step 335, if no event is detected 335, the current frame (starting with $f_{start}$) from the video of the viewed channel is received and displayed in step 340. Next, in step 345, the frame counter is incremented, $n = n + 1$, and if no event is detected yet, the next frame from the video of the viewed channel is received and displayed in step 340, and so on. When an event is detected, in step 335, an emission report (generated as further described below) is sent in step 350. Notice that the occurrence of an event delineates a video segment, identified by $f_{start}$ and $n$, that the sent emission report corresponds to.

An event, that may trigger the sending 350 of an emission report, may be the end of a program segment, the switch to another channel, the switch into a commercial, the elapsing of a predetermined period of time, or a combination thereof. Generally, the frequency of sending emission reports should be as small as possible to reduce the amount of data traffic, thereby, limiting energy consumption associated with the reporting activity itself. In an aspect, the frequency of sending emission reports may be controlled by determining the type of events that may trigger (in step 335) the transmission of a report 350.

As illustrated in FIG. 3, following the transmission of an emission report 350, if the television is still on, then steps 320-345 can be carried out until a new event is detected 335, which triggers the transmission of a new emission report. As explained above, the carbon intensity may vary over time due to changes in the power source(s) that supply the electricity to the display device. Therefore, in an aspect, following the transmission of an emission report 350, if the television is still on 355, also step 315 may be carried out. Thus, carbon intensity can be determined 315 either only once after the television is switched on 310 (following loop 358) or it can be determined 315 after each emission report is sent 350 (following loop 356).

According to aspects, the emission reports described herein can be sent 350 to the content provider either via a return channel, an IP network, a managed IP network, satellite uplink, mobile network, or any other communication means. The information included in the emission report can be encoded in a variety of different formats, either human readable or only machine readable. The emission report can be formatted as an XML message, a binary message (with or without an ASCII or a binary header), a HTML, or a JSON. Furthermore, the CMCD standard (Common Media Client Data), defined in CTA-5004 (https://cdn.cta.tech/cta/media/media/resources/standards/pdfs/cta-5004-fmal.pdf), can be augmented with syntax appropriate for the reporting described here.

According to further aspects, the emission reports described herein can be encoded in a secure manner, so that the mechanism presented here cannot be used for attacks and so that false reports can be detected and ignored. To that end, an encryption scheme can be employed. Furthermore, the reports sent back to the content provider can be sent in an anonymous manner, to protect the privacy of the owner of the reporting device. In particular, the reports may not be linked to personal information, account information, or any other information that can identify the viewer and/or reveal the viewer's viewing behavior. The primary purpose of the emission reports is to provide more accurate reporting of emissions caused by consuming content.

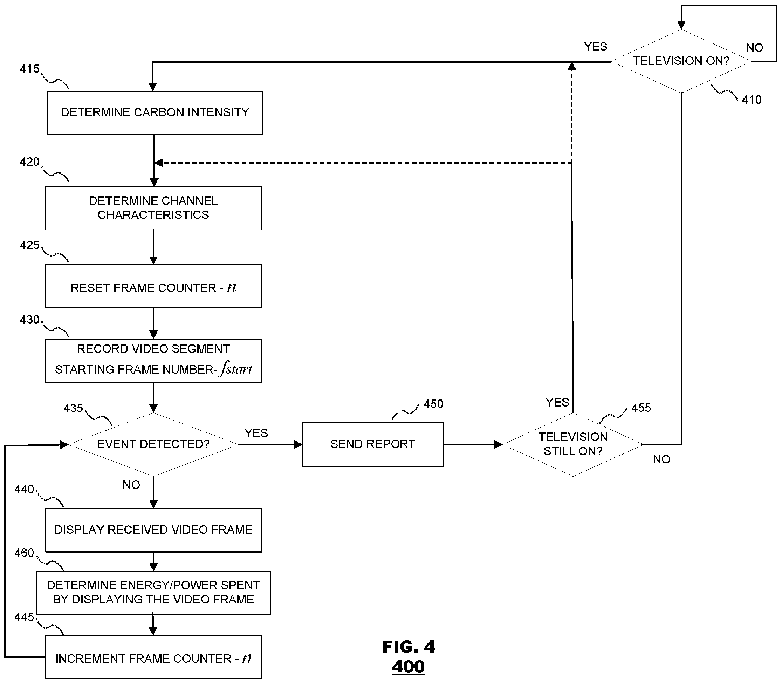

FIG. 4 is a flowchart illustrating a second method for tracking carbon emission caused by content consumption 400. Just as described with respect to FIG. 3, applying method 400, a display device can be configured to generate reports having information indicative of emissions caused by displaying content and to send these reports to the content provider or the device maker. Thus, steps 410-455 of method 400 are similar in their operation to corresponding steps 310-355 of method 300; however, step 460 further extends method 300. In step 460, the energy (or power) that is spent for displaying the received video frame 440 can be determined. In an aspect, such energy (or power) can be measured by dedicated hardware component(s) that can be built into the device displaying the received video frame. In another aspect, such energy (or power) can be estimated based on pixel intensities of the received video frame, device information (e.g., display technology and/or parameters), or any other information accessible to the device. While the former approach may be costlier than the latter approach, it is more direct and so more likely to be accurate in determining the energy (power).

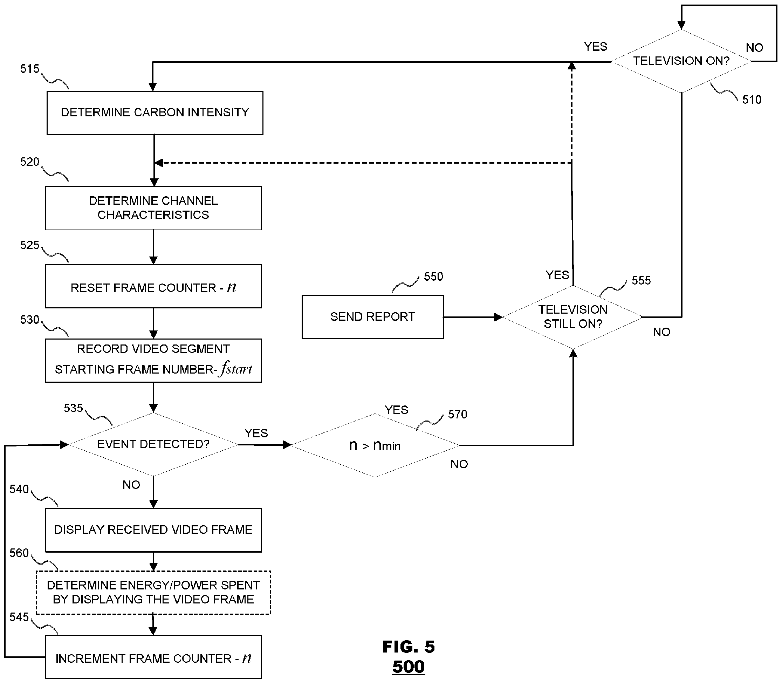

FIG. 5 is a flowchart illustrating a third method for tracking carbon emission caused by content consumption 500. Just as described with respect to FIG. 3 and FIG. 4, applying method 500, a display device can be configured to generate reports having information indicative of emissions caused by displaying content and to send these reports to the content provider or the device maker. Thus, steps 510-555 of method 500 are similar in their operation to corresponding steps 310-355 of method 300 and corresponding steps 410-455 of method 400; and step 560 (if present) operates as step 460. However, step 570 further extends methods 300 and 400. In step 570, only if the frame counter is larger than a minimal value, $n_{min}$, a report is sent in step 550. Consequently, if the time spent on viewing a video segment of a channel (since the last time a report was sent 550) corresponds to a number of frames that is less than a minimum number of frames, $n_{min}$, a report corresponding to that time will not be sent. This allows the number of reports to be reduced, for example, in a case where a viewer is quickly switching from one channel to another.

The tracking of emissions caused by content consumption, according to the example methods 300, 400, 500 described herein, facilitates the generation of emission reports. These emission reports may be of different types. Each type of report may include different combinations of data elements, based on which the emission amount, caused by displaying content during a corresponding time period, can be derived. Typically, an emission report, denoted R, identifies a viewed channel and a video segment (from the viewed channel) the report corresponds to. Such information enables the content provider to associate the reported emission with a certain program of a certain channel. Two types of reports are demonstrated herein, namely report type A and report type B.

An emission report of type A may include the following data elements.

- Channel characteristics, including a channel name and its address (e.g., as determined in steps 320, 420, or 520). Based on this information, the emission caused by viewing content produced by the identified channel can be directed to (or associated with) the entity controlling the channel, for example.

- Video segment identification, including the starting frame number, $f_{start}$, of the video segment and the number of frames $n$ in the video segment (or, equivalently, start- and end- timestamps). Based on this information, the video segment that the report corresponds to can be identified.

- Device information, including, for example, image resolution of the display, the type of the display (e.g., the display technology such as OLED or LCD), and the used parameter(s) of the display. As relevant to the display type, the display parameters may include parameters such as gamma y, display primaries, display white, peak power used per primary, peak luminance, and/or average peak luminance per a number of frames.

- Carbon intensity, denoted $C$ (e.g., as determined in steps 315, 415, or 515).

An emission report of type B may include the following data elements:

- Channel characteristics, including a channel name and its address (e.g., as determined in steps 320, 420, or 520). Based on this information, the emission caused by viewing content produced by the identified channel can be directed to (or associated with) the entity controlling the channel, for example.

- Video segment identification, including the starting frame number, $f_{start}$, of the video segment and the number of frames $n$ in the video segment (or, equivalently, start- and end- timestamps). Based on this information, the video segment that the report corresponds to can be identified.

- Emission amount caused by displaying the video segment, denoted $G$. Alternatively, the energy (or power) used to display the video segment, denoted $E$ (or $P$) and the carbon intensity $C$ (e.g., as determined in steps 315, 415, or 515) can be reported.

Hence, a report of type A may include device information, based on which a content provider (receiving this report) can estimate the energy spent to display a respective video segment. Based on that estimated energy, $\hat{E}$, and the reported carbon intensity, C, the content provider can obtain the emission caused by displaying the video segment - that is, $G = C\hat{E}$. A report of type B omits device information, but instead directly reports the emission $G$, or directly reports the energy $E$ (or power $P$) and the carbon intensity $C$ based on which $G$ can be computed by the content provider.

Generating a report of type B may require additional processing to compute the energy $E$ (or the power $P$) that is spent by the device during the displaying of a corresponding video segment. In an aspect, this additional processing may include determining of the energy (or power) consumed by each frame of the video segment (e.g., as performed by step 460 or 560). Despite the additional processing involved, generating a report of type B may be advantageous, from a device maker perspective, as no device-specific information has to be transmitted.

According to aspects, data elements from both report types can be combined to form other report types. For example, in another type of report, the carbon intensity $C$ may not be included. In such a case, the content provider may use values for $C$ obtained from another source or locally determined. For example, to obtain the carbon intensity $C$, the content provider may use a regional forecast 230, 235 (if the region where the report is being sent from is known), use a national forecast 240, 245, or use a default value for the carbon emission intensity 250.

In addition, other information may be added to the reports, should this become necessary for increasing the accuracy or the flexibility in obtaining the emission amount caused by the consumption of content by displaying devices. In an aspect, the power sources used by the display device while playing a corresponding video segment can be added to the emission report. For example, if the power source is a solar panel on the roof of the end-user's residence (or other renewable sources) this can be flagged in the report.

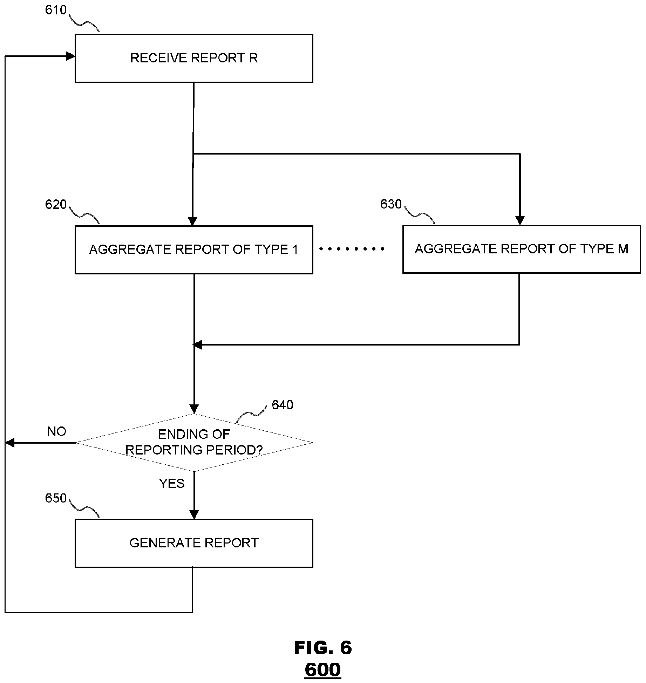

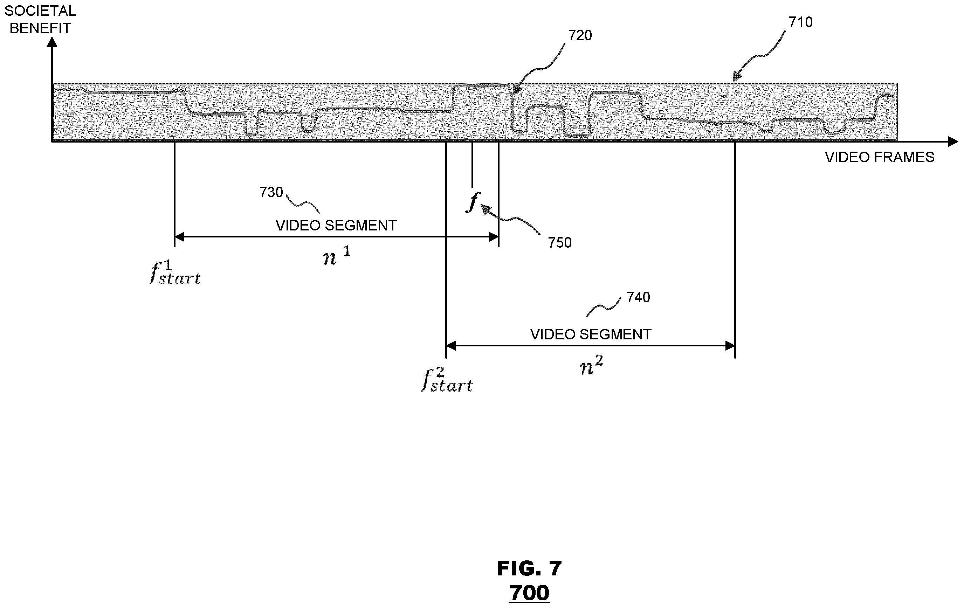

Hence, a content provider, during or following the distribution of content to end-user devices, may receive emission reports from these devices that correspond to (overlapping and not overlapping) video segments from the content viewed. According to aspects, the content provider may integrate information from the received reports to generate therefrom the emission amount associated with the distributed content, as further described below with reference to FIG. 6 and FIG. 7.

FIG. 6 is a flowchart illustrating a first method for integrating emission reports received from consumers of content 600. Applying the method 600, a content provider (e.g., broadcasting or streaming the content) can aggregate information in emission reports (e.g., received from devices displaying the content) according to their types. As demonstrated by the example of FIG. 6, in step 610, a report $R$ is received. Such a report may be of type $m$, that is, one of possible $M$ reports (e.g., $m = 1$ may correspond to a type A report and $m = M$ may correspond to a type B report). The information provided by the received report $R$ is aggregated with previously received reports of the same type. For example, if $R$ is of type 1, in step 620, information from that report will be aggregated with reports of type 1 previously received. Similarly, if $R$ is of type $M$, in step 630, information from that report will be aggregated with reports of type $M$ previously received. Next, if a reporting period has not ended 640, the next report $R$ is received 610 and processed in steps 620-630. If the reporting period ended 640, a report representing the emission caused during the reporting period is generated 650 based on the aggregated reports 620-630. The reporting period can be determined as the end of a day, a week, or any other period of time, for example, corresponding to a certain event the impact of which is to be assessed (e.g., Olympics game coverage).

In an aspect, aggregating information of $K$ reports of type A may be formulated as follows.

$$G_{Total} = \sum_{k=1}^{K} C^k \hat{E}^k, \qquad (2)$$

where $C^k$ is the carbon intensity provided by report k, where $\hat{E}^k$ is the energy estimated based on device information provided by report k; and where $G_{Total}$ is the emission amount caused by displaying the content during a reporting period based on the received reports of type A.

In another aspect, aggregating information of $K$ reports of type B may be formulated as follows.

$$G_{Total} = \sum_{k=1}^{K} G^k, \qquad (3)$$

where $G^k$ is the carbon emission intensity provided by report k; and where $G_{Total}$ is the emission amount caused by displaying the content during a reporting period based on the received reports of type B. Alternatively, when instead of $G^k$, the energy $E^k$ and the carbon intensity $C^k$ are provided by a report of type B, then $G^k$ can be replaced by $C^k E^k$. Similarly, when instead of $G^k$, the power $P^k$ and the carbon intensity $C^k$ are provided by a report of type B, then $G^k$ can be replaced by $C^k P^k/r$, where r is the frame rate of the video segment report k corresponds to.

FIG. 7 is a diagram illustrating a second method for integrating emission reports received from consumers of content 700. FIG. 7 demonstrates a content 710 to be broadcasted or streamed to end-users' display devices. The content is characterized by a societal benefit, denoted $s_f$, shown by a graph 720. The societal benefit can be a number (e.g., between 0 and 1) that measures the societal importance of the corresponding content. Such characterization allows programs (within the content 710) to be differentiated into categories which are more useful or less useful (valuable) to society. Accordingly, a program educating the public about climate change probably has a high societal benefit, whereas a commercial probably has a low societal benefit (see, European Patent Application 24305523.3, filed April 4, 2024, the content of which is incorporated herein in its entirety). In an aspect, when a segment of content has a high societal benefit, the emission caused by its viewing may be tolerated to a larger degree.

FIG. 7 additionally shows video segments 730, 740 for which emission reports are being received from end-users' display devices. For example, with respect to a video segment 730, starting with frame $f_{start}^1$ and having $n^1$ frames, a report of type A (or B) may be received from an end-user display device. And, with respect to a video segment 740, starting with frame $f_{start}^2$ and having $n^2$ frames, a report of type B (or A) may be received from the same or another end-user display device. According to aspects, reports can be aggregated with respect to each frame $f$ (e.g., 750) that is present within video segments the reports correspond to (e.g., 730 or 740), as described below.

The emission associated with a frame $f$ - that is, $G_f$ - can be computed as follows:

$$G_f = (1 - s_f) \sum_{k=1}^{K_f} \frac{G^k}{n^k}, \qquad (4)$$

Where $k$ is one report, $R^k$, out of $K_f$ received reports that include frame $f$; where $G^k$ is the emission caused by displaying the video segment that report $R^k$ corresponding to; where $n^k$ is the number of frames in that video segment; and where $s_f$ is the societal benefit of frame $f$. In an aspect, the societal benefit may not be considered (i.e., $s_f$=0). Thus, the emission amount associated with a content 710 including F frames is:

$$G_{Total} = \sum_{f=1}^{F} G_f, \qquad (5)$$

In another aspect, an initial value of $G_f$ (e.g., $G_f = 0$) can be updated each time a new report $R^k$ is received. In this case, upon reception of a new report $R^k$, the value of $G_f$ can be updated for each frame $f$ included in the video segment that the new report $R^k$ corresponds to, that is, for each $f \in [f_{\text{start}}, f_{\text{start}} + n]$, as follows:

$$dG_f = \left(1 - s_f\right)\frac{G^k}{n^k} \qquad (6)$$

$$G_f = G_f + dG_f \qquad (7)$$

$$G_{\text{total}} = G_{\text{total}} + dG_f \qquad (8)$$

Notice that the carbon emission $G^k$ (used in equations (4) and (6)) can be readily available from report $R^k$ (e.g., when it is of type B). However, when $G^k$ is not reported in $R^k$ the following options can be carried out:

1) $G^k$ can be replaced by $C^k E^k$, assuming $E^k$ is provided by report $R^k$ (e.g., when it is of type B) or $E^k$ can be estimated (obtaining $\hat{E}^k$) based on device information reported in $R^k$ (e.g., when it is of type A);

2) $G^k$ can be replaced by $C^k P^k / r$, assuming $P^k$ and $r$ are provided by report $R^k$ (e.g., when it is of type B), where r is the frame rate of the corresponding video segment;

3) $G^k$ can be estimated by the content provider (e.g., as proposed in EP24305262.8).

If the carbon intensity $C^k$ is not reported in $R^k$, it can be determined using a regional forecast 230, 235 (if the geographical region where the report is being sent from is known), using a national forecast 240, 245, or using a default value for the carbon emission intensity 250.

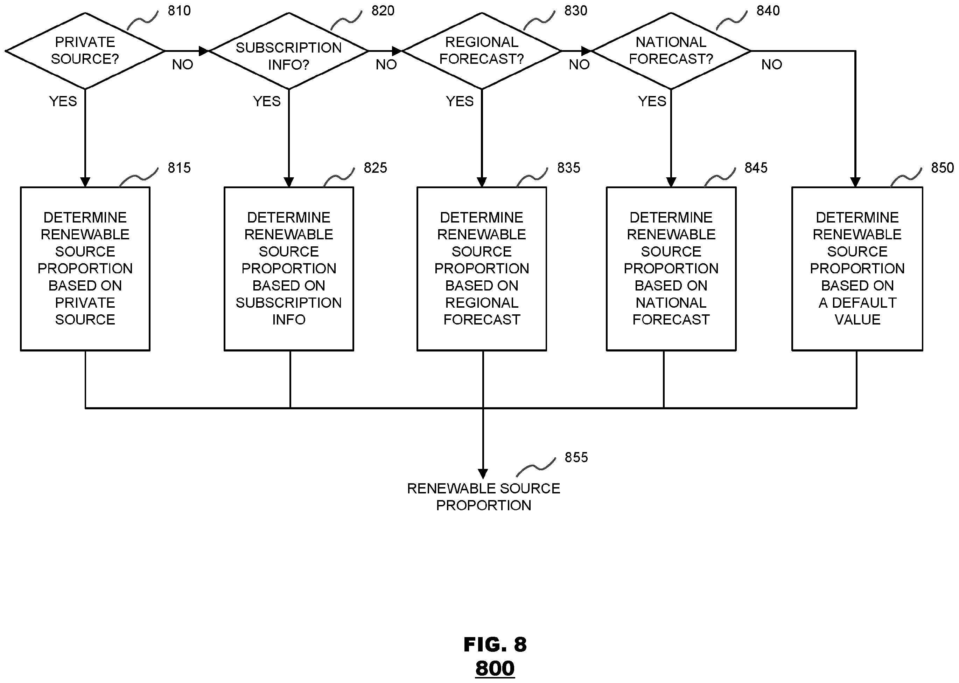

The third generation partnership project (3GPP) specifies mobile communications systems (3G, 4G, 5G and beyond). Reporting on energy consumption and greenhouse gas emissions is within its remit. For example, the 3GPP's TR 22.882 report discusses energy-related issues, including reporting of energy-related information (see, 3GPP TR 22.882, "Study on Energy Efficiency as Service Criteria," v19.3.0 (2024-03)). Therein, one type of information that is required to be reported is the proportion of renewable source(s) of energy that is utilized with respect to the use of a provided service. Hence, according to further aspects, the renewable source proportion used by a device can be reported. To that end, the renewable source proportion can be derived by progressive inquiries, as explained below in reference to FIG. 8.

FIG. 8 is a flowchart illustrating a method for determining a renewable source proportion associated with an electrical device 800. A renewable source proportion, denoted by p, can be expressed either as a percentage or as a value between 0 and 1. Similar to the manner in which a carbon intensity can be determined (e.g., as described in reference to FIG. 2), the most accurate information that is available is used to determine the renewable source proportion associated with the use of electricity by a device at a given time and at a given location. Thus, in a case where the end-users have their own locally produced source of energy 810, if such energy is provided by renewable sources (such as privately owned solar panels or wind turbines) then the renewable source proportion can be determined as $p = 1$. But if such energy is provided by diesel generators, then the renewable source proportion can be determined as $p = 0$. Otherwise, in a case where the end-users use the grid 820-840, the following process can be carried out to determine the renewable source proportion (via an API provided by a service provider, for example). If subscription information is available 820, the renewable source proportion can be determined based on information available by the subscription 825. If subscription information is not available, then the presence of a regional energy forecast can be queried 830, and if available, the renewable source proportion can be determined based on that regional energy forecast 835. If a regional forecast is not available, then a national energy forecast may be queried 840. If available, the renewable source proportion can be determined based on the national forecast 845. In the absence of a national energy forecast, the renewable source proportion can be derived based on a default value 850 (e.g., based on a global estimate for the renewable source proportion).

According to aspects, the renewable source proportion can be determined in steps 315, 415, or 515 (instead of or in addition to determining the carbon intensity) and be used for reporting in steps 350, 450, or 550. For example, reports that contain renewable source proportions may be reports of type C, and information therefrom may be aggregated as explained in reference to FIG. 6.

An emission report of type C may include the following data elements:

• Channel characteristics, including a channel name and its address (e.g., as determined in steps 320, 420, or 520). Based on this information, the emission caused by viewing content produced by the identified channel can be directed to (or associated with) the entity controlling the channel, for example.

- Video segment identification, including the starting frame number, $f_{start}$, of the video segment and the number of frames $n$ in the video segment (or, equivalently, start- and end- timestamps). Based on this information, the video segment that the report corresponds to can be identified.
- The energy $E$ (or power $P$) used to display the video segment and the renewable source proportion, $p$, used in displaying that video segment.

When reporting the renewable source proportion, however, the carbon intensity associated with the non-renewable source(s) may not be provided. For example, if the reported renewable source proportion is $p = 0.4$, then the remaining $p = 0.6$ of non-renewable source(s) (such as, a coal power source and/or a nuclear power source) and their associated carbon intensity may be unknown. To estimate the carbon intensity $C$, the national gas emissions intensity $C_{national}$ can be used as follows:

$$\hat{C} = (1 - p)\, C_{national}. \tag{9}$$

Following the same example, for $p = 0.4$, the carbon intensity can be estimated by $\hat{C} = 0.6\, C_{national}$. Note that the regional forecast 235 (if the geographical region of the device is known) or the national forecast 245 can be used to determine a carbon intensity value that can be used (instead of $C_{national}$) to derive $\hat{C}$. Thus, in the case of a report of type C, the carbon emission $G^k$ (used in equations (4) and (6)) can be replaced by $\hat{C}^k E^k$ (or $\hat{C}^k P^k/r$). In a case where only $p$ is reported, an estimate for $E^k$ (or $P^k/r$) can be used to derive the carbon emission $G^k$.

In an aspect, the renewable source proportion can be approximated based on the carbon intensity. Hence, the renewable source proportion can be approximated by a value, denoted $\hat{p}$, representing the relation between the carbon intensity, $C_x$ (e.g., determined as described in reference to FIG. 2) and the national gas emissions intensity $C_{national}$. The estimate for $p$ can be expressed as:

$$\hat{p} = 1 - C_x/C_{national}. \tag{10}$$

Note that, typically, the national gas emissions intensity $C_{national}$ is associated with energy sources that include also renewable sources. Therefore, $\hat{p}$ assesses whether the energy supply used by the device is better or worse than the national average. For example, if a diesel generator is used by the device, then its associated carbon intensity, $C_x$, is larger than the national average, $C_{national}$, and, therefore, the renewable source proportion is $\hat{p} < 0$. If a solar panel is used by the device, then the carbon intensity is zero, $C_x = 0$, and, therefore, the renewable source proportion is $\hat{p} = 1$.

According to aspects, in addition to the emission report types described above (e.g., emission report types A, B, and C), other emission report types (and combination thereof) may be used. For example, emission report of type D or type E may be generated and sent by a device to various recipients, as described below.

An emission report of type D may include the following data elements.

- Recipient characteristics, including a list of recipients (e.g., as may be determined in steps 320, 420, or 520).

- Video segment identification, including the starting frame number, $f_{start}$, of the video segment and the number of frames $n$ in the video segment. Alternatively, UTC Start time and UTC End time, or UTC Start time and Duration may be used. Based on this information, the video segment that the report corresponds to can be identified.

- Device information, including, for example, image resolution of the display, the type of the display (e.g., the display technology such as OLED or LCD), and the used parameter(s) of the display. As relevant to the display type, the display parameters may include parameters such as gamma $y$, display primaries, display white, peak power used per primary, peak luminance, and/or average peak luminance per a number of frames.

- Carbon intensity, denoted $C$ (e.g., as determined in steps 315, 415, or 515).

An emission report of type E may include the following data elements:

- Recipient characteristics, including a list of recipients (e.g., as may be determined in steps 320, 420, or 520).

- Video segment identification, including the starting frame number, $f_{start}$, of the video segment and the number of frames $n$ in the video segment. Alternatively, UTC Start time and UTC End time, or UTC Start time and Duration may be used. Based on this information, the video segment that the report corresponds to can be identified.

- Emission amount caused by displaying the video segment, denoted $G$. Alternatively, the energy (or power) used to display the video segment, denoted $E$ (or $P$) and the carbon intensity $C$ (e.g., as determined in steps 315, 415, or 515) can be reported.

In the above type D and type E emission reports, more than one recipient may be specified, and so multiple stakeholders may be able to receive the emission reports. Such emission reports may be sent as part of an HTTP header, a HTML message, or a JSON object. In another aspect, the emission reports may be sent to a default recipient, in which case the list of recipients (indicated in the emission report) may include *additional* recipients.

For example, the emission reports can be embedded in messages sent by a display device (or a set-top box) to a content distribution network (CDN), such as specified in the CTA 5004 standard (Common Media Client Data (CMCD)). This standard governs communication between end user devices and a CDN so that video transmission between the two can be optimized. In an aspect, emission reports (e.g., of type D or type E) can be added to the CMCD specification to enable Scope 3 reporting. This is advantageous, since as required by Scope 3 reporting, multiple actors in a video transmission chain may each be required to perform their own Scope 3 reporting, and so there may be multiple stakeholders who would need to receive messages including emission reports.

Additionally, rather than sending video frame numbers (i.e., $f_{start}$ and $n$), another approach to reporting timing information may be through the use of time code information. In this case, the video segment that the emission report is corresponding to could be reported as a start time and an end time, or as a start time and a duration. To that end, a UTC time (Unix time stamps), or an SMPTE time code information (defined in the SMPTE 12M-1 and 12M-2 standards) can be used.

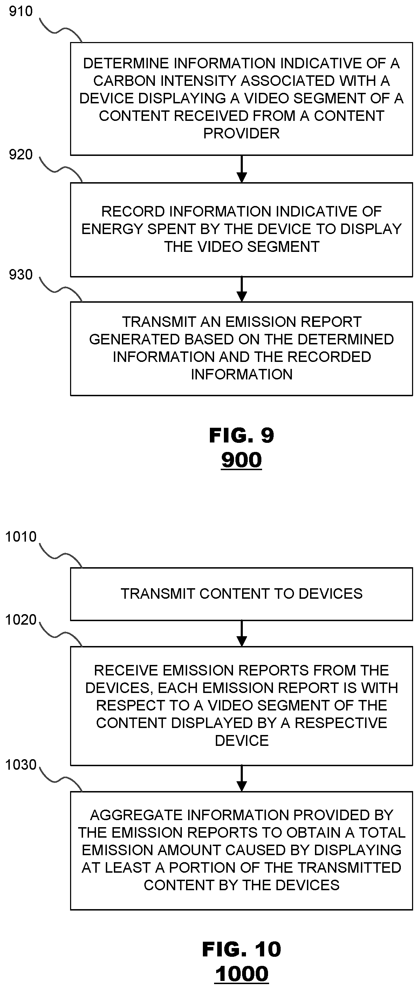

FIG. 9 is a flowchart illustrating a method for generating information regarding carbon emission caused by consumption of content 900. According to aspects, in step 910, information indicative of a carbon intensity, associated with a device displaying a video segment of content received from a content provider, can be determined. The determined information may include a carbon intensity and/or a renewable source proportion, determined based on a location of the device displaying the content and/or based on a time of day of displaying the content (as described in reference to FIG. 2 and FIG. 8). For example, the carbon intensity can be determined based on one or more power sources supplying electricity to the device displaying the content (see equation (1)). In step 920, information indicative of energy spent by the device to display the video segment can be recorded. In an aspect, the recorded information contains information describing the device, including one or more of a resolution, a type, and a parameter of the device. In another aspect, the recorded information contains a determined energy (or power) spent by the device to display the video segment. In step 930, an emission report can be transmitted to the content provider. The emission report is generated based on the determined information (in step 910) and based on the recorded information (in step 920). The generated report can also include information identifying a channel producing the content or information identifying one or more recipients, as well as information identifying the video segment. In an aspect, information from the emission report may be displayed to the user of the device.

FIG. 10 is a flowchart illustrating a method for aggregating information regarding carbon emissions caused by distribution of content 1000. According to aspects, in step 1010, content can be transmitted to devices of end-users. In step 1020, emission reports can be received from the devices. Each of the received emission reports is with respect to a video segment of the content displayed by a respective device. In step 1030, information provided by the emission reports can be aggregated to obtain an emission amount $G_{Total}$ caused by displaying at least a portion of the transmitted content by the devices (e.g., see equations (2), (3), or (5)).

In a first aspect, a received emission report $R^k$ can include an emission amount $G^k$ caused by displaying a respective video segment. In a second aspect, a received emission report $R^k$ can include carbon intensity $C^k$ and energy $E^k$ spent to display a respective video segment, based on which the emission amount can be derived (e.g., $G^k = C^k E^k$). In a third aspect, a received emission report $R^k$ can include carbon intensity $C^k$ and power $P^k$ spent to display a respective video segment, based on which the emission amount can be derived (e.g., $G^k = C^k P^k / r$). In a fourth aspect, a received emission report $R^k$ can include carbon intensity $C^k$ and information describing the device, in which case the emission amount can be derived by first estimating the energy based on the information describing the device, that is, $\hat{E}^k$, and then the emission amount can be derived based on the carbon intensity $C^k$ and the estimated energy $\hat{E}^k$ (e.g., $G^k = C^k \hat{E}^k$).

According to aspects, a renewable source proportion used in displaying a respective video segment can be reported by the device. Thus, as described in reference to equation (9), in a first aspect, a received emission report $R^k$ can include a proportion, $p$, of renewable source(s) used in displaying a respective video segment, based on which the emission amount can be derived; in a second aspect, a received emission report $R^k$ can include $p$ and the energy spent to display the respective video segment, based on which the emission amount can be derived; and, in a third aspect, a received emission report $R^k$ can include $p$ and the power spent to display the respective video segment, based on which the emission amount can be derived. In yet another aspect, a received emission report $R^k$ can include a carbon intensity associated with a device displaying a respective video segment, and based on that carbon intensity and on a national gas emission intensity, the renewable source proportion $p$ used in displaying that video segment can be estimated (see equation (10)).

As described herein with respect to FIG. 7, the method 1000 can be applied to aggregate emission amounts caused by displaying a video frame $f$ of the content. Thus, as explained with respect to equation (4), for a subset of received emission reports that are with respect to video segments including the video frame (i.e., a subset of $K_f$ reports), emission amounts that are attributed to one frame can be added (to obtain $G_f$). Where, for a report of that subset, a respective emission amount that is attributed to one frame is obtained by dividing an emission amount $G^k$ (derived from information provided by the report) by the number of frames in a respective video segment $n^k$.

One or more embodiments provide a computer program comprising instructions which when executed by one or more processors cause such processors to perform the methods according to any of the embodiments described above. One or more embodiments also provide a computer readable storage medium having stored thereon instructions for performing the methods according to any of the embodiments described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first operation" and a "second operation". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.   A method, comprising:

   determining information indicative of a carbon intensity associated with a device displaying a video segment of a content received from a content provider;
   recording information indicative of energy spent by the device to display the video segment; and
   transmitting an emission report generated based on the determined information and the recorded information.

2.   An apparatus, comprising:

   at least one processor; and
   memory storing instructions that, when executed by the at least one processor, cause the apparatus to:

determine information indicative of a carbon intensity associated with a device displaying a video segment of a content received from a content provider,
record information indicative of energy spent by the device to display the video segment, and
transmit an emission report generated based on the determined information and the recorded information.

3. The method according to claim 1 or the apparatus according to claim 2, wherein the information indicative of the carbon intensity is determined based on at least one of a location of the device displaying the content and a time of day of displaying the content.

4. The method according to claim 1 or 3 or the apparatus according to claim 2 or 3, wherein the information indicative of the carbon intensity comprises one or more of a carbon intensity or a renewable source proportion.

5. The method according to any one of claims 1 and 3-4 or the apparatus according to any one of claims 2-4, wherein the generated report further comprises at least one of information identifying a channel producing the content, information identifying one or more recipients, and information identifying the video segment.

6. The method according to any one of claims 1 and 3-5 or the apparatus according to any one of claims 2-5, wherein the recorded information comprises information describing the device, including one or more of a resolution, a type, or a parameter of the device.

7. The method according to any one of claims 1 and 3-6 further comprising, or the apparatus according to any one of claims 2-6 wherein the instructions further cause the apparatus to perform:
determining an energy or a power spent by the device to display the video segment, wherein the recorded information comprises the determined energy or power.

8. A method, comprising:

transmitting content to devices;
receiving emission reports from the devices, each emission report is with respect to a video segment of the content displayed by a respective device; and
aggregating information provided by the emission reports to obtain an emission amount caused by displaying, by the devices, at least a portion of the content.

9. An apparatus, comprising:

at least one processor; and
memory storing instructions that, when executed by the at least one processor, cause the apparatus to:

transmit content to devices,
receive emission reports from the devices, each emission report is with respect to a video segment of the content displayed by a respective device, and
aggregate information provided by the emission reports to obtain an emission amount caused by displaying, by the devices, at least a portion of the content.

10. The method according to claim 8 or the apparatus according to claim 9, wherein an emission report, of the received emission reports, includes:
an emission amount caused by displaying a respective video segment.

11. The method according to claim 8 or the apparatus according to claim 9, wherein an emission report, of the received emission reports, includes (i) a carbon intensity and (ii) an energy or a power spent to display a respective video segment, and wherein the method further comprising, or the instructions further cause the apparatus to perform:
deriving an emission amount caused by displaying the video segment based on (i) the carbon intensity and (ii) the energy or the power.

12. The method according to claim 8 or the apparatus according to claim 9, wherein an emission report, of the received emission reports, includes a carbon intensity and information describing the device, and wherein the method further comprising, or the instructions further cause the apparatus to perform:

estimating an energy spent to display the video segment based on the information describing the device; and deriving an emission amount caused by displaying the video segment based on the carbon intensity and the estimated energy.

13. The method according to claim 8 or the apparatus according to claim 9, wherein an emission report, of the received emission reports, includes a renewable source proportion used in displaying a respective video segment, and wherein the method further comprising, or the instructions further cause the apparatus to perform:
deriving an emission amount caused by displaying the video segment based on the renewable source proportion.

14. The method according to claim 8 or the apparatus according to claim 9, wherein an emission report, of the received emission reports, includes (i) a renewable source proportion used in displaying a respective video segment and (ii) an energy or a power spent to display the respective video segment, and wherein the method further comprising, or the instructions further cause the apparatus to perform:
deriving an emission amount caused by displaying the video segment based on (i) the renewable source proportion and (ii) the energy or the power.

15. The method according to claim 8 or the apparatus according to claim 9, wherein an emission report, of the received emission reports, includes a carbon intensity associated with a device displaying a respective video segment, and wherein the method further comprising, or the instructions further cause the apparatus to perform:
estimating, based on the carbon intensity and based on a national gas emission intensity, a renewable source proportion used in displaying a respective video segment.

**FIG. 1**
**100**

EP 4 727 141 A1

FIG. 2
200

315 — DETERMINE CARBON INTENSITY

320 — DETERMINE CHANNEL CHARACTERISTICS

325 — RESET FRAME COUNTER - $n$

330 — RECORD VIDEO SEGMENT STARTING FRAME NUMBER - $fstart$

335 — EVENT DETECTED?

340 — DISPLAY RECEIVED VIDEO FRAME

345 — INCREMENT FRAME COUNTER - $n$

350 — SEND REPORT

355 — TELEVISION STILL ON?

356

358

310 — TELEVISION ON?

YES    NO

YES

YES

NO

NO

FIG. 3
300

415 — DETERMINE CARBON INTENSITY

420 — DETERMINE CHANNEL CHARACTERISTICS

425 — RESET FRAME COUNTER - $n$

430 — RECORD VIDEO SEGMENT STARTING FRAME NUMBER - $f_{start}$

435 — EVENT DETECTED?
— NO
— YES

440 — DISPLAY RECEIVED VIDEO FRAME

460 — DETERMINE ENERGY/POWER SPENT BY DISPLAYING THE VIDEO FRAME

445 — INCREMENT FRAME COUNTER - $n$

450 — SEND REPORT

455 — TELEVISION STILL ON?
— YES
— NO

410 — TELEVISION ON?
— YES
— NO

FIG. 4
400

**FIG. 5**
**500**

RECEIVE REPORT R — 610

AGGREGATE REPORT OF TYPE 1 — 620

AGGREGATE REPORT OF TYPE M — 630

ENDING OF REPORTING PERIOD? — 640

NO

YES

GENERATE REPORT — 650

**FIG. 6**
**600**

EP 4 727 141 A1

SOCIETAL
BENEFIT

720

710

VIDEO FRAMES

730

VIDEO SEGMENT

$n^1$

$f^1_{start}$

$f$

750

740

VIDEO SEGMENT

$n^2$

$f^2_{start}$

**FIG. 7**

**700**

FIG. 8
**800**

910

DETERMINE INFORMATION INDICATIVE OF A
CARBON INTENSITY ASSOCIATED WITH A
DEVICE DISPLAYING A VIDEO SEGMENT OF A
CONTENT RECEIVED FROM A CONTENT
PROVIDER

920

RECORD INFORMATION INDICATIVE OF
ENERGY SPENT BY THE DEVICE TO DISPLAY
THE VIDEO SEGMENT

930

TRANSMIT AN EMISSION REPORT
GENERATED BASED ON THE DETERMINED
INFORMATION AND THE RECORDED
INFORMATION

**FIG. 9**
**900**

1010

TRANSMIT CONTENT TO DEVICES

1020

RECEIVE EMISSION REPORTS FROM THE
DEVICES, EACH EMISSION REPORT IS WITH
RESPECT TO A VIDEO SEGMENT OF THE
CONTENT DISPLAYED BY A RESPECTIVE
DEVICE

1030

AGGREGATE INFORMATION PROVIDED BY
THE EMISSION REPORTS TO OBTAIN A TOTAL
EMISSION AMOUNT CAUSED BY DISPLAYING
AT LEAST A PORTION OF THE TRANSMITTED
CONTENT BY THE DEVICES

**FIG. 10**
**1000**

EUROPEAN SEARCH REPORT

**Application Number**

EP 24 30 6658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JULIEN LEMOTHEUX ORANGE: "CM2229_EADC Study Mission Report", DVB, DIGITAL VIDEO BROADCASTING, C/O EBU - 17A ANCIENNE ROUTE - CH-1218 GRAND SACONNEX, GENEVA - SWITZERLAND , 14 June 2023 (2023-06-14), XP017865750, Retrieved from the Internet: URL:https://member.dvb.org/wg/CM/documentR evision/download/49268 CM2229_EADC Study Mission Report.doc [retrieved on 2023-06-14] * the whole document * ----- | 1-15 | INV. H04N21/442 G06Q10/06 H04N21/466 H04N21/658 |
| A | DOCUMENT 6C/TEMP/212(REV 1): "Question ITU-R 147/6;G-716", ITU-T DRAFT; STUDY PERIOD 2021-2024; STUDY GROUP 05; SERIES G-716, INTERNATIONAL TELECOMMUNICATION UNION, GENEVA ; CH , vol. ties/05 19 April 2023 (2023-04-19), pages 1-14, XP044393036, Retrieved from the Internet: URL:https://www-api.itu.int/ifa/t/2022/sg0 5/docs/230613/td/ties/gen/T22-SG05-230613- TD-GEN-0716!!ZIP-E.zip G-716_att.docx [retrieved on 2023-04-19] * page 10 - page 11; figure 4 * ----- | 1-15 | |

|  |  |
|---|---|
| | TECHNICAL FIELDS SEARCHED (IPC) |
| | H04N G06Q |

The present search report has been drawn up for all claims

| Place of search | Date of completion of the search | Examiner |
|---|---|---|
| Munich | 3 March 2025 | Schneiderlin, Jean |

EPO FORM 1503 03.82 (P04C01)

**EP 4 727 141 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24305262
- EP 24315189

- EP 24305523

**Non-patent literature cited in the description**

- **JAKHRANI A Q et al.** Estimation of carbon footprints from diesel generator emissions. *2012 International Conference in Green and Ubiquitous Technology*, 2012